Europäisches Patentamt

European Patent Office

Office européen des brevets

(19)

(11) Publication number: **0 206 368 B1**

(12) # EUROPEAN PATENT SPECIFICATION

(45) Date of publication of patent specification :
23.01.91 Bulletin 91/04

(51) Int. Cl.⁵: **C08L 5/00, C08J 3/12**

(21) Application number : **86200744.0**

(22) Date of filing : **29.04.86**

(54) **Process for the preparation of heteropolysaccharide particles.**

(30) Priority : **19.06.85 GB 8515484**

(43) Date of publication of application :
**30.12.86 Bulletin 86/52**

(45) Publication of the grant of the patent :
**23.01.91 Bulletin 91/04**

(84) Designated Contracting States :
**AT BE CH DE FR GB IT LI LU NL SE**

(56) References cited :
**GB-A- 1 418 868**
**US-A- 4 053 699**
**US-A- 4 260 741**

(73) Proprietor : **SHELL INTERNATIONALE
RESEARCH MAATSCHAPPIJ B.V.
Carel van Bylandtlaan 30
NL-2596 HR Den Haag (NL)**

(72) Inventor : **van der Pas-Toornstra, Hilde Maria
Badhuisweg 3
NL-1031 CM Amsterdam (NL)**
Inventor : **Visser, Hans Pieter
Badhuisweg 3
NL-1031 CM Amsterdam (NL)**

(74) Representative : **Bennett, David Arthur Horder
et al
4, York Road
London SE1 7NA (GB)**

Jouve, 18, rue Saint-Denis, 75001 PARIS

## Description

The invention relates to a process for the preparation of heteropolysaccharide particles.

Certain bacteria produce heteropolysaccharides, which are used as viscosifiers in various fields of technology. An important application of such heteropolysaccharides is in the production of oil from an underground reservoir. They can be used as viscosifiers in aqueous drive fluids to enhance oil production from the reservoir, but they can also be employed in drilling fluids, well completion fluids, etc.

Heteropolysaccharide solutions are prepared by cultivating certain bacteria to yield a fermentation broth, and subsequently by removing the bacteria from the broth, e.g. by filtration. Such bacteria include species from the genera Xanthomonas, Pseudomonas, Agrobacterium, Rhizobium, Alcaligenes and Sclerotium. In most cases the cultivation of the bacteria will not be carried out at the same place as where the heteroploysaccharide is used. To reduce transportation costs the product is therefore delivered in as concentrated a form as possible. Thus, it has been proposed to make solid heteropolysaccharide particles from the broth and to dissolve them at the place of use. For example in the case of xanthan gum, which is the name of the heteropolysaccharide product of the Xanthomonas bacteria, an applied method for manufacturing solid xanthan gum particles is the precipitation of the heteropolysaccharide by means of alcohols and/or quaternary ammonium compounds, in particular by means of isopropanol. However, the solid product thus obtained has some disadvantageous properties which render it less suitable for use in oil production. For example, although the solid product is relatively easily dissolved in an aqueous medium, the resulting solution does not show satisfactory filterability properties.

It has now been found that a solid product can be obtained which upon dissolving yields solutions with excellent viscosity and filterability properties, whereas the redissolving itself is relatively easy.

The present invention therefore provides a process for the preparation of heteropolysaccharide particles, which comprises introducing a heteropolysaccharide solution into a bed of inert beads to which the solution adheres, passing a fluidizing gas through the bed of inert beads, thereby fluidizing inert beads and drying heteropolysaccharide solution to yield solid heteropolysaccharide, which dislodges from the inert beads to give heteropolysaccharide particles, and removing the dislodged heteropolysaccharide particles from the bed of inert beads by means of the fluidizing gas.

This process can be carried out using a solution of heteropolysaccharide produced by any species of the above-mentioned genera of bacteria. For example, polysaccharides generated by Pseudomonas Sp. NCIB 11592 (e.g. as described in EP-A-40445), Sp. NCIB 11264 (e.g. as described in UK Patent Specification No. 1,539,064) and NCIB 11883 (e.g. as described in EP-A-138 255) are suitable. However, the heteropolysaccharide solution employed as starting material in the process according to the invention is preferably a xanthan gum solution.

The xanthan gum can be derived from all kinds of Xanthomonas bacteria, such as Xanthomonas begoniae, Xanthomonas malvacearum, Xanthomonas carotae, Xanthomonas incanae, Xanthomonas phaseoli, Xanthomonas vesicatoria, Xanthomonas papavericola, Xanthomonas translucens, Xanthomonas vasculorum or Xanthomonas hedrae. The most suitable bacterium is the Xanthomonas compestris. Various strains of the latter bacterium can be used, e.g. NCIB 11854 (strain T 1188) (e.g. as described in EP-A-130 647).

The heteropolysaccharide solution which is to be dried can advantageously be a fermentation broth from which bacteria and other solids have been removed. Preferably the broth is concentrated to yield a heteropolysaccharide solution containing from 5 to 15 %w of heteropolysaccharide. The hetero polysaccharide solutions within this concentration range are viscous and sticky and therefore they very readily adhere to the inert beads. Moreover, from an economical point of view such heteropolysaccharide solutions are preferred since lower concentrations would involve evaporation of larger volumes of water per unit weight of particular product.

The way in which the solution is introduced in the bed is not critical. Due to the turbulent movement of the inert beads the solution will be spread over the beads anyhow. It is however preferred to disperse the solution homogeneously over the surface of the bed. Coveniently this can be done by introducing the solution through several nozzles or by spraying. This spraying can be carried out at the bottom of the bed, but also above the bed so that the solution as a mist descends upon the inert beads, adheres thereto and due to the fluidization of the beads gets uniformly distributed.

The following characteristics of the inert beads may be of importance : the size distribution, mechanical strength, shape, surface properties, size and density. The inert beads have to possess a certain mechanical strength since they are subjected to attrition so that dried heteropolysaccharide becomes unstuck. It is of course evident that no part of the inert beads themselves should be broken off. The shape of the beads can be selected from various forms, such as cylindrical or annular forms or the like. The beads may also

2

have an elliptical cross-section. Preferably, the inert beads are substantially in the form of spheres. The particle size of the inert beads can be selected from a wide range of values. The most feasible size is also determined by the density of the material of which the beads consist, since by the impact of the inert beads the dry heteropolysaccharide should be dislodged. Proper process conditions, such as the fluidizing gas velocity, can be adjusted in accordance with the particle size selected. Good results are obtainable with inert beads, the longest dimension (in the case of spheres, the diameter) of which ranges from 3 to 8 mm. The density of the inert beads is preferably selected such that it is higher than the density of the dried heteropolysaccharide. Since the heteropolysaccharide particles produced are generally of a smaller size than the inert beads, it is thus warranted that the fluidizing gas will entrain the lighter heteropolysaccharide particles.

The beads should be really inert, i.e. that they do not react with the heteropolysaccharides but merely act as carriers. The inert beads can therefore be of china, clay, quartz sand, plastics or metal. Glass, stainless steel, copper, polymethylmethacrylate and ceramics have all been found to be suitable. Preference is given to inert beads of glass or stainless steel. The beads should not consist of heteropolysaccharide as then degradation of the heteropolysaccharide which constitutes the beads and/or an inhomogeneous drying of the adhered solution may occur.

The fluidizing gas can conveniently, but not necessarily, be nitrogen or air. Nitrogen is preferred, as it yields a product which after having been dissolved in water, shows an even better filterability performance than air does. The fluidizing gas may contain some water vapour. In general it is preferred that the relative humidity of the fluidizing gas is less than 60%. Thus part of the fluidizing gas can be directly heated up after having passed through the bed of beads and be recirculated to the bed of beads, whereas it is preferred to remove at least part of the water present in the gas e.g. by means of a bleed stream before heating up the gas.

When the inert beads with heteropolysaccharide solution adhered thereto are fluidized at elevated temperature, care is to be taken that the heteropolysaccharide does not degrade due to too high a temperature. Accordingly the temperature in the bed of inert beads preferably does not exceed 140°C. To obtain a satisfactory drying rate in the process the temperature in the bed is advantageously above 60°C, although the process can be carried out at ambient temperature. The heat can be delivered by heating elements arranged in or at the periphery of the bed of beads. To facilitate temperature control it is prefered to use a heated fluidizing gas whether or not in combination with heat elements placed in the bed of inert beads. In view of the above, the temperature of the fluidizing gas, when entering the bed of inert beads, is preferably in the range 60 to 140°C.

As stated hereinabove the most advantageous velocity of the fluidizing gas will be dependent, inter alia, on the size and density of the inert beads. A person skilled in the art can easily select the proper gas rate. Superficial velocities in the range 1 to 10 m/s will generally be found to be suitable.

The process to the present invention is not restricted to the use of a fluidized bed per se. It is only applicable in a so-called spouted bed. In a spouted bed a diluted phase core is present with upward moving fluidized beads entrained by a cocurrent flow of fluidizing gas and a dense phase annular region is existing around the dilute phase core with downward moving beads. Preferably through the downward moving beads a current of so-called secondary gas is passed at a relatively low velocity to keep the beads free-flowing. In the case of a spouted bed the velocity of the gas entraining the beads is generally higher than in the case of a fluidized bed, provided similar beads are present.

The dried heteropolysaccharide will become dislodged from the inert beads by means of the attrition between the beads. However, dislodging may be enhanced by the use of an impact frame. Thus, the inert beads with heteropolysaccharide adhered thereto, are advantageously passed against an impact frame, and use of an impact frame is particularly advantageous when a spouted bed is employed. The impact frame may for example be a grate with holes so small that the beads cannot pass through them. A very simple and suitable impact frame comprises one baffle in a position substantially perpendicular to the direction of the fluidizing gas velocity. Any such baffle is suitably placed at the top or slightly above the top of the bed of inert beads.

The heteropolysaccharide particles entrained by the fluidizing gas are advantageously recovered by passing the fluidizing gas containing the dislodged heteropolysaccharide particles, through at least one separator, e.g. a cyclone and/or a bag filter.

The fluidizing gas emanating from the separator(s) now freed from heteropolysaccharide may conveniently be at least partly recycled, optionally after being dried and/or reheated, to the bed of inert beads.

Two embodiments of the process will be described by way of example with reference to the accompanying drawings, in which :

Figure 1 represents a flow diagram of apparatus incorporating a fluidised bed dryer and

Figure 2 represents a flow diagram of apparatus incorporating a spouted bed dryer.

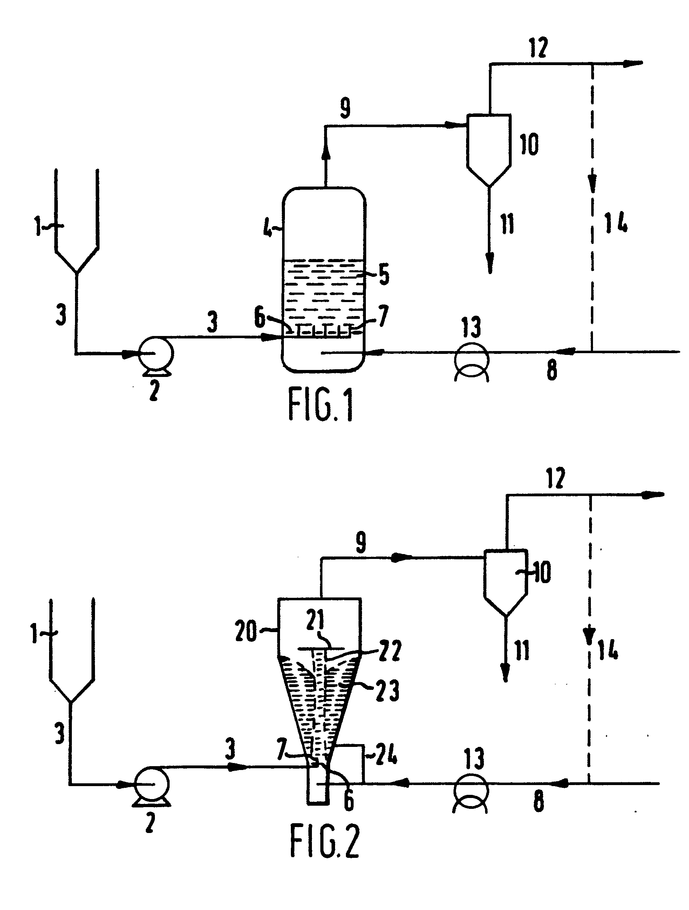

In Figure 1 a heteropolysaccharide solution is pumped from a feed vessel 1 via an inlet line 3 into a vessel 4 by means of a pump 2. The solution is introduced into a bed of spherical particles, e.g. glass spheres, resting on a distributor 6 by means of nozzles 7. Through a gas flow line 8 a fluidizing gas, heated in a heater 13, is passed into the vessel 4, which gas flows through the holes in the distributor 6, creating a fluidized bed 5. Heteropolysaccharide solution adheres to the fluidized inert beads and is dried by the fluidized gas. When the heteropolysaccharide is sufficiently dried, it dislodges from the inert beads due to the attrition between the beads and is entrained by the fluidizing gas towards an outlet line 9 connected to the top of the vessel 4. Via the outlet line 9 the mixture of fluidizing gas and heteropolysaccharide particles is introduced into a separator, e.g. a cyclone 10, wherein the particles are separated from the gas and are recovered via a product line 11 at the bottom of the cyclone 10. The fluidizing gas, free from heteropolysaccharide particles, is discharged through a discharge line 12. Optionally at least a part of the discharged fluidizing gas can be recycled to the line 8 and then to the vessel 4, as indicated by the, dotted, return line 14. The fluidizing gas is heated by means of a heater 13. It is also possible to dry and/or reheat the discharge fluidizing as in return line 14 before it is fed into the gas flow line 8.

In Figure 2, wherein like reference numerals designate like integers as in Figure 1, the fluized bed has been replaced by a spouted bed. The preheated fluidizing gas is passed via the line 8 into a vessel 20, if necessary provided with a distributor 6. Through a nozzle 7 a heteropolysaccharide solution is sprayed into the vessel 20 and adheres to inert beads present therein. Fluidizing gas entrains the beads with adhered heteropolysaccharide solution through a dilute phase central core 22 towards an impact baffle 21, placed just above the bed of inert beads. From beads which collide against the baffle, dry heteropolysaccharide if still present dislodges in the form of solid particles, which are entrained by the fluidizing gas. Recovery of heteropolysaccharide particles is as in the description of Figure 1. Beads either clean or with wet heteropolysaccharide still adhered thereto, move downward in a dense phase annular region 23. Through this dense phase secondary gas is passed to loose up the beads, which gas enters via a second gas flow line 24. The gas velocity in the second gas flow line 24 is reduced in comparison with the gas velocity in line 8 by a sort of resistance (not shown). When the beads reach the bottom of the vessel 20 they are again entrained and passed against the impact baffle 21.

The process will further be illustrated by means of the following Examples.

## EXAMPLE 1

Xanthan gum particles were prepared in several experiments carried out as described above in relation to Figure 1 of the drawings. A xanthan gum solution containing 8.9%w of xanthan gum, obtained from Xanthomonas campestris NCIB 11854, was passed into a fluidized bed of glass spheres with a diameter of 5 mm at a rate of 600 kg solution/m$^3$ bed/hr. As fluidizing gas air or nitrogen at various temperatures was used. The superficial gas velocity, measured at 20°C, was 3 m/s. After separation of the dried xanthan gum particles, three properties of the solid product were determined.

The dilution factor (DF) is a measure for the viscosifying performance of the solid product and is defined as the quantity of brine to be added to 1 g of the product to achieve a viscosity of 20 cP at 30 °C at a shear rate of 7.3 s$^{-1}$. The brine was an aqueous solution containing 1 %w NaCl and 0.1 %w CaCl$_2$.

The filterability (Fi) is defined as the time required for a 200 ml sample of the solution obtained at the determination of the DF, to pass through a 1.2 µm pore size filter at 1 bar pressure difference and at 30 °C, after prefiltrating using a rough filter, to remove lumps, if present.

The hydration time (HT) is a measure for the ease with which the solid product can be dissolved. It is defined as the ratio of the viscosity obtained after 15 min stirring and the final viscosity, i.e. after 2 hr stirring, of a sample obtained in the determination of the dilution factor. The stirring procedure, of course, is done under standard conditions (i.e. 6-blade impeller, 35 mm diameter in a 800 ml beaker at a speed of 1500 rpm, and at a temperature of 30 °C).

The results are indicated in Table I.

## TABLE I

| Experiment No. | Fluidizing Gas | Gas temp. °C | DF ml | Fi s | HT 15 min / final |
|---|---|---|---|---|---|
| 1 | air | 70 | 1200 | 900 | 0.80 |
| 2 | $N_2$ | 70 | 1370 | 480 | 0.86 |
| 3 | $N_2$ | 80 | 1385 | 400 | 0.76 |

### EXAMPLE 2

The procedure of Example 1 was followed with the exception that in place of the glass spheres there was employed a fluidized bed of stainless steel spheres of diameter 3mm and the Xanthan gas solution was introduced at a flow rate of 1070 kg solution/m³bed/hr. The fluidizing gas was $N_2$, gas temp. was 90°C, the dilution factor (DF) was 1010 ml, the filterability (Fi) was 90s and the hydration time (HT) was 1.0.

Other fluidized beds employed successfully include fluidized beds of copper spheres of diameter 1.55 mm (at flow rate 1035 kg solution/m³bed/hr) ; stainless steel spheres of diameter 2.0 mm (at flow rate of 1070 kg/solution/m³bed/hr.) ; polymethyl methacrylate spheres of diameter 3.0 mm (at flow rate of 610 kg solution/m³ bed/hr) ; ceramic spheres of diameter 3.5 mm (at a flow rate of 265 kg/solution/m³bed/hr and ceramic spheres of diameter 8.0 mm (at a flow rate of 326 kg solution/m³bed/hr).

### Comparative Experiments

Some parameters were determined for a solid product obtained from the above xanthan gum solution, obtained by diluting one pbw of the solution with one pbw of water and subsequently precipitating the xanthan gum from the diluted solution obtained by adding isopropanol to the solution.

Further, for a commercially available product, "KELZAN", (registered trade mark), which is a xanthan gum (ex Kelco) obtained by isopropanol precipitation, the same parameters were determined. Results for the isopropanol-precipitation products are indicated in Table II.

## TABLE II

| Experiment No. | Source | DF ml | Fi S | HT 15 min / final |
|---|---|---|---|---|
| 4 | T 1188 | 100 | blocking | ——— |
| 5 | Kelzan | 1080 | blocking | 0.67 |

From the above it is apparent that the filterability of the solutions of products prepared according to the present invention is much better than for solutions of products obtained by isopropanol precipitation. The same applies as to the dilution factor and the hydration time.

## Claims

1. Process for the preparation of heteropolysaccharide particles which comprises introducing a heteropolysaccharide solution into a bed of inert beads to which the solution adheres, passing a fluidizing gas through the bed of inert beads thereby fluidizing inert beads and drying the adhered heteropolysaccharide solution to yield solid heteropolysaccharide, which dislodges from the inert beads to give heteropolysaccharide particles, and removing the dislodged heteropolysaccharide particles from the bed by means of the fluidizing gas.

2. Process according to claim 1, in which the heteropolysaccharide is a xanthan gum.

3. Process according to claim 1 or 2, in which the heteropolysaccharide solution contains from 5 to 15 %w of heteropolysaccharide.

4. Process according to any one of claims 1 to 3, in which the inert beads are substantially in the form of spheres.

5. Process according to any one of claims 1 to 4, in which the longest dimension of the inert beads ranges from 3 to 8 mm.

6. Process according to any one of claims 1 to 5, in which the inert beads are of glass or stainless steel.

7. Process according to any one of claims 1 to 6, in which the fluidizing gas is nitrogen.

8. Process according to any one of claims 1 to 7, in which the temperature of the fluidizing gas when entering the bed of inert beads is in the range 60 to 140 °C.

9. Process according to any one of claims 1 to 8, in which the fluidizing gas has a superficial velocity in the range 1 to 10 m/s.

10. Process according to any one of claims 1 to 9, in which the heteropolysaccharide is dislodged from the inert beads by passing inert beads with heteropolysaccharide adhered thereto against an impact frame.

## Ansprüche

1. Verfahren zur Herstellung von Heteropolysaccharidteilchen, welches das Einführen einer Heteropolysaccharidlösung in ein Bett aus inerten Perlen, an denen die Lösung anhaftet das Hindurchleiten eines Fluidisierungsgases durch das Bett aus inerten Perlen, wodurch die inerten Perlen fluidisiert werden und die daran haftende Heteropolysaccharidlösung unter Bildung von festem Heteropolysaccharid getrocknet wird, welches sich von den inerten Perlen unter Bildung von Heteropolysaccharidteilchen ablöst, und das Entfernen der abgelösten Heteropolysaccharidteilchen aus dem Bett mit Hilfe des Fluidisierungsgases umfaßt.

2. Verfahren nach Anspruch 1, wobei das Heteropolysaccharid ein Xanthangummi ist.

3. Verfahren nach Anspruch 1 oder 2, wobei die Heteropolysaccharidlösung 5 bis 15 Gew.-% des Heteropolysaccharides enthält.

4. Verfahren nach einem der Ansprüche 1 bis 3, wobei die inerten Perlen im wesentlichen in der Form von Kügelchen vorliegen.

5. Verfahren nach einem der Ansprüche 1 bis 4, wobei die längste Abmessung der inerten Perlen in einen Bereich von 3 bis 8 mm fällt.

6. Verfahren nach einem der Ansprüche 1 bis 5, wobei die inerten Perlen aus Glas oder rostfreiem Stahl bestehen.

7. Verfahren nach einem der Ansprüche 1 bis 6, wobei das Fluidisierungsgas Stickstoff ist.

8. Verfahren nach einem der Ansprüche 1 bis 7, wobei die Temperatur des Fluidisierungsgases bei dessen Eintritt in das Bett aus inerten Perlen in einen Bereich von 60 bis 140°C fällt.

9. Verfahren nach einem der Ansprüche 1 bis 8, wobei das Fluidisierungsgas eine Oberflächengeschwindigkeit in einem Bereich von 1 bis 10 m/s aufweist.

10. Verfahren nach einem der Ansprüche 1 bis 9, wobei das Heteropolysaccharid dadurch von den inerten Perlen entfernt wird, daß man die inerten Perlen mit daran klebendem Heteropolysaccharid gegen einen Aufprallrahmen führt.

## Revendications

1. Procédé pour la préparation de particules d'hétéropolysaccharide, dans lequel on introduit une solution d'hétéropolysaccharide dans un lit de perles inertes à laquelle la solution adhère, on fait passer un gaz fluidisant à travers le lit de perles inertes, de façon à fluidiser les perles inertes et à sécher la solution d'hétéropolysaccharide adhérente afin d'obtenir un hétéropolysaccharide solide qui quitte les particules inertes pour fournir des particules d'hétéropolysaccharide, et on élimine les particules d'hétéropolysaccharide délogées du lit de perles inertes au moyen du gaz fluidisant.

2. Procédé selon la revendication 1, dans lequel l'hétéropolysaccharide est une gomme de xanthane.

3. Procédé selon la revendication 1 ou 2, dans lequel la solution d'hétéropolysaccharide renferme de 5 à 15% en poids d'hétéropolysaccharide.

4. Procédé selon l'une quelconque des revendications 1 à 3, dans lequel les perles inertes sont pratiquement sous la forme de sphères.

5. Procédé selon l'une quelconque des revendications 1 à 4, dans lequel la dimension la plus longue des perles inertes se situe dans la gamme de 3 à 8 mm.

6. Procédé selon l'une quelconque des revendications 1 à 5, dans lequel les perles inertes sont en verre ou en acier inoxydable.

7. Procédé selon l'une quelconque des revendications 1 à 6, dans lequel le gaz fluidisant est de l'azote.

8. Procédé selon l'une quelconque des revendications 1 à 7, dans lequel la température du gaz fluidisant lorsqu'il pénètre dans le lit de perles inertes est dans la plage de 60 à 140°C.

9. Procédé selon l'une quelconque des revendications 1 à 8, dans lequel le gaz fluidisant a une vitesse superficielle dans la plage de 1 à 10 m/s.

10. Procédé selon l'une quelconque des revendications 1 à 9, dans lequel l'hétéropolysaccharide est délogé des perles inertes en transférant les perles inertes avec l'hétéropolysaccharide qui y adhère contre un châssis d'impact.

FIG.1

FIG.2